# FASCICULE DE BREVET EUROPEEN

(11) **EP 1 459 936 B1**
(45) Date de publication et mention de la délivrance du brevet: **24.09.2008**
(21) Numéro de dépôt: 04290726.1
(22) Date de dépôt: 17.03.2004
(51) Int. Cl.: B60R 5/04

(54) **Voiture automobile avec un ensemble arrière de masquage du chargement à longueur active variable**
Kraftfahrzeug mit Laderaumabdeckung mit variabler wirksamer Länge
Vehicle with a rear load compartment cover with variable active length

(30) Priorité: 17.03.2003 FR 0303261
(43) Date de publication de la demande: 22.09.2004
(73) Titulaire: Faurecia Automotive Industrie, 92000 Nanterre (FR)
(72) Inventeur: Henry, Christophe, Faurecia Automotive Industrie, 08210 Mouzon (FR)
(74) Mandataire: Blot, Philippe Robert Emile

(56) Documents cités:
- EP-A- 0 565 430
- EP-A- 1 136 320
- DE-A- 4 040 038
- DE-A- 19 533 806
- DE-C- 19 706 355
- US-A- 4 220 367
- US-A- 5 011 208
- PATENT ABSTRACTS OF JAPAN vol. 2002, no. 03, 3 avril 2002 (2002-04-03) & JP 2001 310681 A (KASAI KOGYO CO LTD), 6 novembre 2001 (2001-11-06)
- PATENT ABSTRACTS OF JAPAN vol. 2000, no. 24, 11 mai 2001 (2001-05-11) & JP 2001 180382 A (HAYASHI GIJUTSU KENKYUSHO:KK), 3 juillet 2001 (2001-07-03)
- PATENT ABSTRACTS OF JAPAN vol. 1999, no. 01, 29 janvier 1999 (1999-01-29) & JP 10 264250 A (KASAI KOGYO CO LTD), 6 octobre 1998 (1998-10-06)
- PATENT ABSTRACTS OF JAPAN vol. 2000, no. 13, 5 février 2001 (2001-02-05) & JP 2000 289529 A (ASHIMORI IND CO LTD), 17 octobre 2000 (2000-10-17)

## Description

La présente invention concerne un véhicule automobile, selon le préambule de la revendication 1.

L'invention s'applique au masquage du contenu du coffre d'un véhicule automobile.

Dans un ensemble arrière connu (EP-A-1 136 320), la tablette rigide et la bande souple sont constituées par deux pièces distinctes réalisées séparément. Au cours d'une opération ultérieure, la bande souple est fixée à la tablette, par exemple au moyen d'une charnière formée par une tige et une gorge solidaires respectivement de la bande souple et de la tablette,

De tels ensembles permettent de masquer de manière satisfaisante le chargement arrière d'un véhicule automobile, particulièrement dans le cas où les sièges arrières sont déplaçables ou/et inclinables.

Cependant, de tels ensembles ne donnent pas entière satisfaction. En effet, ces ensembles sont constitués par deux pièces distinctes et l'opération d'assemblage de ces deux pièces contribue à une augmentation importante du coût de la fabrication de ces ensembles et de la logistique relative à cette fabrication.

Des véhicules automobiles selon le préambule de la revendication 1 sont connus de US 4 220 367 et DE-C-4 040 038.

Un but de l'invention est d'obtenir un ensemble arrière de masquage de chargement à longueur active variable, comprenant une tablette rigide et une bande souple à longueur active variable, à structure simplifiée et à coût réduit.

A cet effet, l'invention a pour objet un véhicule automobile selon la revendication 1.

Le véhicule selon l'invention peut comporter l'une ou plusieurs des caractéristiques des revendications 2 à 8.

Des exemples de réalisation de l'invention vont maintenant être décrits en regard des dessins annexés, sur lesquels :
- la Figure 1 est une vue schématique, partielle et en perspective, de l'extrémité arrière d'un véhicule automobile selon l'invention,
- la Figure 2 est une vue schématique en coupe suivant la ligne II-II de la Figure 1 ; et
- la Figure 3 est une vue analogue à la Figure 1, illustrant un ensemble arrière de masquage non couvert par les revendications.

Dans tout ce qui suit, les orientations utilisées sont les orientations habituelles d'un véhicule automobile. Ainsi, les termes « avant », « arrière », « droit » et « gauche » s'entendent par rapport à la position d'un conducteur de véhicule automobile et à son sens de marche.

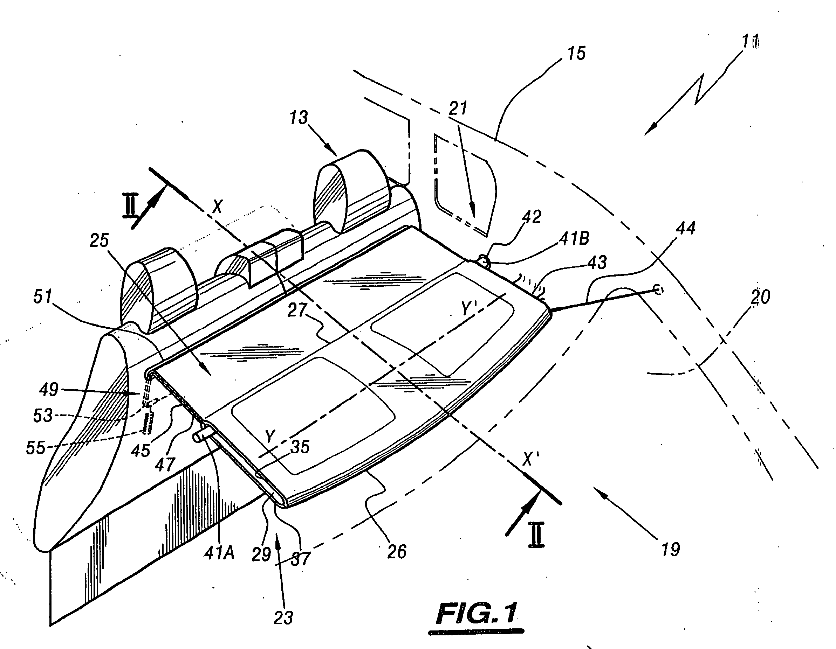

On a représenté sur la Figure 1 l'extrémité arrière 11 d'un véhicule automobile. Cette extrémité 11 comprend des sièges arrières 13, une partie 15 du flanc latéral droit de la carrosserie ainsi que le coffre 19 du véhicule.

Le coffre 19 est un espace de chargement délimité notamment par les sièges arrières 13, les flancs latéraux 15 de la carrosserie et par le hayon 20 du véhicule.

L'extrémité arrière 11 comprend, à l'arrière des dossiers des sièges 13, un ensemble arrière 21 de masquage d'un chargement disposé dans le coffre 19. Un tel chargement n'a pas été représenté sur la Figure 1.

L'ensemble arrière de masquage 21 comprend une tablette 23 essentiellement rigide, de forme sensiblement plane, et une première bande 25 souple de masquage qui relie la tablette rigide 23 aux sièges arrières 13.

Par « essentiellement rigide », on entend soit une tablette rigide, comme dans les exemples décrits ci-dessous, soit une tablette semi-rigide, notamment constituée de deux parties dont la partie arrière est rabattable sur la partie avant.

La tablette rigide 23 s'étend horizontalement le long d'une direction X-X' parallèle à la direction longitudinale du véhicule, entre un bord 26 arrière et un bord 27 avant. La tablette 23 s'étend en outre horizontalement le long d'un axe transversal Y-Y' sur toute la largeur du coffre.

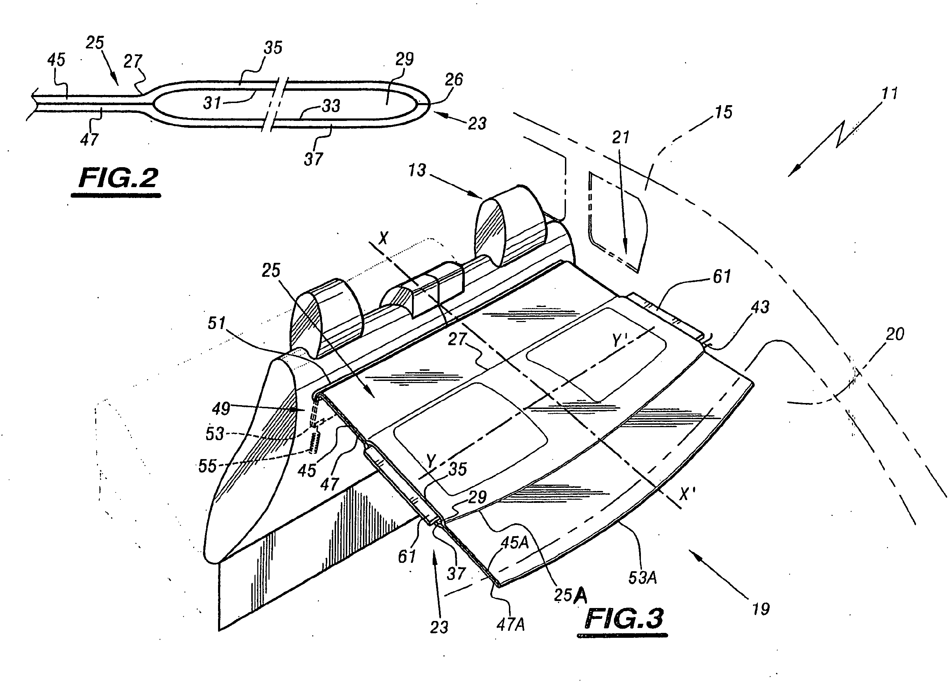

Comme illustré sur la Figure 2, la tablette rigide 23 comprend une plaque 29 rigide dont les faces supérieure et inférieure 31 et 33 sont couvertes respectivement par des première et seconde feuilles 35 et 37 de revêtement.

La plaque rigide 29 est constituée d'une ou plusieurs pièces en matière plastique, réalisées par thermoformage.

Dans l'exemple illustré Figure 1, le bord avant 27 de la tablette 23 est prolongé à ses extrémités latérales par des pivots 41A et 41B d'articulation aux flancs latéraux 15 de la carrosserie. Ces pivots définissent un axe de rotation de la tablette parallèle à l'axe transversal Y-Y' et sont reçus dans des orifices 42 des flancs 15.

Par ailleurs, le bord arrière 26 de la tablette 23 repose sur un support 43 solidaire des flancs latéraux 15 de la carrosserie. Comme il est bien connu, on peut prévoir des liens souples 44 reliant le bord arrière de la tablette 23 au hayon, afin que l'ouverture de celui-ci soulève la tablette.

La première feuille de revêtement 35 est réalisée à base d'un matériau d'habillage, comme une moquette.

La seconde feuille de revêtement 37 est réalisée à base d'un matériau protecteur, comme un tissu ou un non-tissé.

Ces deux feuilles de revêtement 35 et 37 sont fixées sur la plaque rigide 29 par collage.

La première bande souple de masquage 25 est constituée par des premiers prolongements vers l'avant 45 et 47 des première et seconde feuilles de revêtement 35 et 37 au-delà de la plaque rigide 29 suivant la direction longitudinale X-X', et comprend des moyens 49 de liaison au siège.

Ces premiers prolongements 45 et 47 s'étendent depuis le bord avant 27 de la plaque rigide 29 jusqu'à un logement 51 qui s'ouvre vers le haut sur la face arrière des sièges arrières 13. Les prolongements respectifs 45 et 47 des première et seconde feuilles de revêtement 35 et 37 sont collés entre eux lors de l'opération de collage de ces feuilles à la plaque rigide 29.

Les moyens de liaison 49 sont solidaires de l'extrémité avant 53 de la bande souple de masquage 25, à l'opposé du bord avant 27 de la tablette rigide 29. Ces moyens de liaison 49 comprennent au moins un organe élastique 55 de mise sous tension de la bande souple 25. Cet organe 55 est inséré dans le logement arrière 51 des sièges arrières 13 et fixé au fond de ce logement, de sorte qu'il maintient la bande souple de masquage 25 sous tension, quelle que soit la position longitudinale et/ou l'inclinaison des sièges arrières 13.

En variante, les prolongements respectifs 45 et 47 des première et seconde feuilles de revêtement 35 et 37 comprennent une portion élastique longitudinalement, s'étendant sur toute la largeur de la bande 25, apte à se déformer lors du déplacement et/ou de l'inclinaison des sièges arrières 13.

Dans cette variante, la première bande souple de masquage 25 est fixée dans le logement 51 des sièges arrières 13 ou directement sur les sièges arrières 13 par de simples moyens d'attache comme des crochets, des boutons-pression ou des bandes auto-agrippantes du type VELCRO®.

Dans une autre variante de ce premier mode de réalisation, la première bande souple de masquage 25 est constituée uniquement par un premier prolongement 45 ou 47 d'une seule des première et seconde feuilles de revêtement 35 ou 37 au-delà de la plaque rigide 29. Cette variante possède un coût réduit puisqu'il n'est pas nécessaire de réaliser le collage des prolongements respectifs 45 et 47 des première et seconde feuilles de revêtement 35 et 37 entre elles.

Sur la Figure 3, l'ensemble arrière de masquage 21 non couvert par les revendications est en outre muni d'une seconde bande 25A souple de masquage qui relie la tablette rigide 23 au hayon 20.

Cette seconde bande souple de masquage 25A est constituée par des seconds prolongements 45A et 47A des premières et secondes feuilles de revêtement 35 et 45, au-delà de la plaque rigide, suivant la direction longitudinale X-X', vers l'arrière du véhicule. Comme dans l'exemple illustré sur la Figure 1, les seconds prolongements respectifs 45A et 47A des première et seconde feuilles de revêtement 35 et 37 sont collés entre eux lors du collage de ces feuilles à la plaque rigide 29.

Contrairement à l'ensemble illustré sur la Figure 1, les pivots d'articulation aux flancs de la carrosserie sont remplacés par deux prolongements latéraux 61 de la tablette rigide 23. Ces prolongements latéraux s'appuient sur les supports longitudinaux 43 solidaires des flancs 15 de la carrosserie, lorsque le hayon 20 est fermé.

Les moyens de liaison de l'extrémité 53A arrière de la seconde bande souple de masquage 25A au hayon 20 sont constitués par de simples moyens d'attache comme des crochets, des boutons-pression ou des bandes auto-agrippantes du type VELCRO®. Cette seconde bande souple de masquage 25A, dont la longueur active est fixe, isole l'habitacle du véhicule lors de l'ouverture du hayon 20, dont le mouvement est permis par l'élasticité des moyens de liaison 49.

Dans cet ensemble 21 non couvert par les revendications, la bande souple de masquage 25A est constituée uniquement par un second prolongement 45A de la première feuille de revêtement 45 au-delà de la plaque rigide 29 vers l'arrière du véhicule.

Dans une autre variante (non représentée) de cet ensemble 21, le bord avant de la tablette est prolongé à ses extrémités par des pivots reçus dans des coulisses prévues sur les flancs 15.

Grâce à l'invention qui vient d'être décrite, il est possible de disposer d'un ensemble arrière de masquage de chargement à longueur active variable à structure simplifiée et de coût réduit. Cet ensemble comprend une tablette rigide et une bavette souple en une seule pièce.

Ce type d'ensemble permet de préserver la continuité d'aspect entre la tablette rigide et la bande souple.

Par ailleurs, cet ensemble peut comprendre deux bavettes souples s'étendant respectivement vers l'avant et l'arrière du véhicule, ce qui permet d'isoler l'habitacle du véhicule lors de l'ouverture du hayon.

## Revendications

1. Véhicule automobile comprenant :
- un coffre arrière (19), délimité notamment par des flancs latéraux (15) de la carrosserie,
- un élément mobile (13) constitué par un siège arrière (13) ou un hayon (20),
et un ensemble arrière (21) de masquage du chargement disposé dans le coffre (19) dudit véhicule automobile, ledit ensemble (21) étant à longueur active variable;
l'ensemble arrière (21) étant du type comprenant:
- une tablette (23) essentiellement rigide s'étendant transversalement par rapport à une direction (X-X') longitudinale du véhicule, la tablette (23) comprenant une plaque (29) rigide dont au moins une première face (31) est couverte, au moins partiellement, par une première feuille (35) de revêtement à base d'un matériau souple ; et
- au moins une première bande souple de masquage (25) constituée par un premier prolongement (45) à longueur utile variable de la première feuille de revêtement (35) au-delà de la plaque rigide (29), suivant ladite direction longitudinale (X-X') du véhicule,
le bord avant (27) de la tablette (23) étant prolongé à ses extrémités latérales par des pivots (41A, 41B) d'articulation aux flancs latéraux (15) de la carrosserie, les pivots (41A, 41B) étant reçus dans des orifices (42) des flancs latéraux (15) de la carrosserie, **caractérisé en ce que** la bande souple de masquage (25) relie la tablette rigide (23) à l'élément mobile (13) du véhicule, **en ce que** les pivots (41A, 41B) définissent un axe de rotation de la tablette (23) parallèle à un axe transversal (Y-Y'), et **en ce que**
le bord arrière (26) de la tablette (23) repose sur un support (43) solidaire des flancs latéraux (15) de la carrosserie.

2. Véhicule automobile selon la revendication 1, **caractérisé en ce que** les pivots (41A, 41B) sont de forme cylindrique.

3. Véhicule automobile selon la revendication 1 ou 2, **caractérisé en ce que** l'ensemble arrière comprend des liens souples (44) reliant le bord arrière (26) de la tablette (23) au hayon afin que l'ouverture du hayon soulève la tablette (23).

4. Véhicule automobile selon l'une quelconque des revendications précédentes, **caractérisé en ce que** la première bande souple de masquage (25) comprend des moyens (49) de liaison à l'élément mobile (13 ; 20), lesdits moyens de liaison (49) comprenant un organe (55) élastique de mise en tension de la bande souple.

5. Véhicule automobile selon l'une quelconque des revendications 1 à 3, **caractérisé en ce que** la première bande souple de masquage (25) comprend au moins une partie élastique longitudinalement qui s'étend sur toute la largeur de la bande.

6. Véhicule automobile selon l'une quelconque des revendications précédentes, **caractérisé en ce qu'**une seconde face (33) de la plaque rigide (29), opposée à la première face (31), est couverte au moins partiellement, par une seconde feuille (37) de revêtement.

7. Véhicule automobile selon la revendication 6, **caractérisé en ce que** la seconde feuille de revêtement (37) se prolonge longitudinalement au-delà de la plaque rigide (29), en regard du premier prolongement (45) de la première feuille (35), lesdites première et seconde feuilles (35, 37) étant fixées l'une à l'autre au niveau dudit premier prolongement (45).

8. Véhicule automobile selon l'une quelconque des revendications précédentes, **caractérisé en ce que** la tablette rigide est de forme sensiblement plane.

## Claims

1. Motor vehicle comprising:
- a rear boot (19) delimited in particular by lateral side walls (15) of the vehicle body,
- a movable element (13) consisting of a back seat (13) or a tailgate (20),
- and a rear assembly (21) for concealing the load contained in the boot (19) of said motor vehicle, said assembly (21) being of variable active length;
the rear assembly (21) being of the type comprising:
- a substantially rigid apron (23) extending transversely with respect to a longitudinal direction (X-X') of the vehicle, the apron (23) comprising a rigid panel (29) at least a first side (31) of which is covered, at least partly, by a first facing layer (35) based on a flexible material; and
- at least one first flexible concealing strip (25) consisting of a first extension (45), of variable useful length, of the first facing layer (35) beyond the rigid panel (29), in said longitudinal direction (X-X') of the vehicle,
the front edge (27) of the apron (23) being extended at its lateral ends by pivots (41A, 41B) for articulating on the lateral side walls (15) of the vehicle body, the pivots (41A, 41 B) being accommodated in openings (42) in the lateral side walls (15) of the vehicle body,
**characterised in that** the flexible concealing strip (25) connects the rigid apron (23) to the movable element (13) of the vehicle, **in that** the pivots (41A, 41B) define an axis of rotation of the apron (23) parallel to a transverse axis (Y-Y'), and **in that** the rear edge (26) of the apron (23) rests on a support (43) that is integrally connected to the lateral side walls (15) of the vehicle body.

2. Motor vehicle according to claim 1, **characterised in that** the pivots (41A, 41 B) are cylindrical in shape.

3. Motor vehicle according to claim 1 or 2, **characterised in that** the rear assembly comprises flexible ties (44) attaching the rear edge (26) of the apron (23) to the tailgate so that opening the tailgate raises the apron (23).

4. Motor vehicle according to any one of the preceding claims, **characterised in that** the first flexible concealing strip (25) comprises means (49) for connection to the movable element (13; 20), said connecting means (49) comprising a resilient member (55) for tensioning the flexible strip.

5. Motor vehicle according to any one of claims 1 to 3, **characterised in that** the first flexible concealing strip (25) comprises at least one longitudinally elastic part that extends over the entire width of the strip.

6. Motor vehicle according to any one of the preceding claims, **characterised in that** a second side (33) of the rigid panel (29), opposite the first side (31), is at least partly covered by a second facing layer (37).

7. Motor vehicle according to claim 6, **characterised in that** the second facing layer (37) extends longitudinally beyond the rigid panel (29), facing the first extension (45) of the first sheet (35), said first and second sheets (35, 37) being fixed to one another at said first extension (45).

8. Motor vehicle according to any one of the preceding claims, **characterised in that** the rigid apron is substantially flat in shape.

## Patentansprüche

1. Kraftfahrzeug, umfassend:
- einen Heckkofferraum (19), der insbesondere durch Seitenwangen (15) der Karosserie begrenzt ist,
- ein bewegliches Element (13), das aus einem Rücksitz (13) oder einer Heckklappe (20) besteht, und eine Heckeinheit (21) zur Maskierung der Ladung, die in dem Kofferraum (19) des Kraftfahrzeugs angeordnet ist, wobei diese Einheit (21) von variabler Länge ist;
wobei die Heckeinheit (21) umfasst:
- eine im Wesentlichen starre Tafel (23), die sich zu einer Längsrichtung (X-X') des Fahrzeugs quer erstreckt und eine starre Platte (29) umfasst, von der mindestens eine erste Seite (31) mindestens teilweise mit einer ersten Verkleidungsfolie (35) auf der Basis eines biegsamen Werkstoffs bedeckt ist; und
- mindestens ein erstes biegsames Maskierungsband (25), das aus einer ersten Verlängerung (45) veränderlicher Nutzlänge der ersten Verkleidungsfolie (35) über die starre Platte (29) hinaus in der Längsrichtung (X-X') des Fahrzeugs besteht,
wobei der vordere Rand (27) der Tafel (23) an seinen seitlichen Enden durch Drehzapfen (41A, 41B) zur Anlenkung an den Seitenwangen (15) der Karosserie verlängert ist, wobei die Drehzapfen (41A, 41B) in Öffnungen (42) der Seitenwangen (15) der Karosserie aufgenommen sind, **dadurch gekennzeichnet, dass** das biegsame Maskierungsband (25) die starre Tafel (23) mit dem beweglichen Element (13) des Fahrzeugs verbindet, dass die Drehzapfen (41A, 41B) eine zu einer Querachse (Y-Y') parallele Drehachse der Tafel (23) bilden und dass der hintere Rand (26) der Tafel (23) auf einem Halter (43) aufliegt, der mit den Seitenwangen (15) der Karosserie fest verbunden ist.

2. Kraftfahrzeug nach Anspruch 1, **dadurch gekennzeichnet, dass** die Drehzapfen (41A, 41B) von zylindrischer Form sind.

3. Kraftfahrzeug nach Anspruch 1 oder 2, **dadurch gekennzeichnet, dass** die Heckeinheit biegsame Verbindungselemente (44) umfasst, die den hinteren Rand (26) der Tafel (23) mit der Heckklappe verbinden, damit die Öffnung der Heckklappe die Tafel (23) anhebt.

4. Kraftfahrzeug nach einem der vorhergehenden Ansprüche, **dadurch gekennzeichnet, dass** das erste biegsame Maskierungsband (25) Mittel (49) zur Verbindung mit dem beweglichen Element (13; 20) umfasst, die ein elastisches Organ (55) zum Spannen des biegsamen Bands umfassen.

5. Kraftfahrzeug nach einem der Ansprüche 1 bis 3, **dadurch gekennzeichnet**, das erste biegsame Maskierungsband (25) mindestens einen in Längsrichtung elastischen Teil umfasst, der sich über die ganze Breite des Bands erstreckt.

6. Kraftfahrzeug nach einem der vorhergehenden Ansprüche, **dadurch gekennzeichnet, dass** eine zweite Seite (33) der starren Platte (29), die der ersten Seite (31) entgegengesetzt ist, mindestens teilweise mit einer zweiten Verkleidungsfolie (37) bedeckt ist.

7. Kraftfahrzeug nach Anspruch 6, **dadurch gekennzeichnet, dass** die zweite Verkleidungsfolie (37) in Längsrichtung über die starre Platte (29) hinaus gegenüber der ersten Verlängerung (45) der ersten Folie (35) verlängert ist, wobei die erste und die zweite Folie (35, 37) auf Höhe der ersten Verlängerung (45) aneinander befestigt sind.

8. Kraftfahrzeug nach einem der vorhergehenden Ansprüche, **dadurch gekennzeichnet, dass** die starre Tafel von im Wesentlichen ebener Form ist.
